# EUROPÄISCHE PATENTSCHRIFT

(11) **EP 1 344 678 B1**
(45) Veröffentlichungstag und Bekanntmachung des Hinweises auf die Patenterteilung: **26.01.2005**
(21) Anmeldenummer: 03005618.8
(22) Anmeldetag: 12.03.2003
(51) Int. Cl.: B60N 2/28

(54) **Kindersicherheitssitz zum Aufstellen auf und Befestigen an einem Kraftfahrzeugsitz**
Child safety seat to be installed on and secured to a vehicle seat
Siège de sécurité pour enfants à installer et fixer sur un siège de véhicule

(30) Priorität: 15.03.2002 DE 10211498; 15.03.2002 DE 20204151 U; 09.07.2002 DE 20210616 U
(43) Veröffentlichungstag der Anmeldung: 17.09.2003
(73) Patentinhaber: Recaro GmbH & Co. KG, 73230 Kirchheim/Teck (DE)
(72) Erfinder: Querfurth, Winfried, 96365 Nordhalben (DE)
(74) Vertreter: Eichstädt, Alfred, Dipl.-Ing.

(56) Entgegenhaltungen:
- EP-A- 1 077 152
- DE-C- 19 752 536
- FR-A- 2 726 517
- US-B1- 6 199 949

## Beschreibung

Die Erfindung betrifft einen Kindersicherheitssitz mit den in den Oberbegriffen der Ansprüche 1 und 2 angegebenen Merkmalen.

Ein gattungsgemäßer Kindersicherheitssitz ist aus der DE 43 28 625 C2 bekannt. Dieser besteht aus einer Sitzschale, die ein Rückenlehnenelement aufweist, das aus einer Rückenlehne und von der Rückenlehne nach vorn vorstehenden Seitenwangen besteht, in die Durchgriffslöcher eingebracht sind, die jeweils durch einen umlaufenden, in sich geschlossenen Rand begrenzt und zum Durchstecken eines fahrzeugeigenen Dreipunkt-Sicherheitsgurtes vorgesehen sind. Mittels des Dreipunkt-Sicherheitsgurtes kann der Sicherheitssitz an dem Fahrzeugsitz befestigt werden, wobei die Löcher im Übergangsbereich zwischen der Rückenlehne und den Seitenwangen des Rückenlehnenelementes derart ausgebildet sind, dass der Fahrzeugsicherheitsgurt an der Vorderfläche der Rückenlehne anliegt. Jedes der beiden Löcher weist obenseitig einen mit der Vorderfläche der Rückenlehne fluchtenden, schlitzartigen Abschnitt zur genauen Positionierung des Diagonalgurtes des Fahrzeugsicherheitsgurtes und einen daran nach unten sich anschließenden Erweiterungsabschnitt auf. Es ist ersichtlich, dass zur Fixierung des Sicherheitssitzes am Fahrzeugsitz zusätzliche Mittel vorgesehen sein müssen, um eine statische Fixierung des Gurtes an dem Kindersicherheitssitz zu ermöglichen, damit der Sitz in gewünschter Weise von dem Dreipunkt-Sicherheitsgurt, insbesondere von dem Diagonalgurt, zurückgehalten wird und die Rückseite der Rückenlehne an der Vorderseite der Rückenlehne des Fahrzeugsitzes anliegt. Derartige zusätzliche Klemmvorrichtungen im Führungsschlitz sind aufwendig und nicht einfach zu handhaben.

Aus der DE 69 604 431 T2 ist ein Kindersicherheitssitz bekannt, bei dem ein Durchbruch in der Rückenlehne selbst querverlaufend zur Aufnahme des Diagonalgurtes eines Dreipunkt-Sicherheitsgurtes in einem Fahrzeug vorgesehen ist. Die Öffnung ist ähnlich ausgebildet wie die vorher Beschriebene. Sie weist ebenfalls einen Führungsschlitz für den Diagonalgurt auf. Beide Sitze sind darüber hinaus mit Hosenträgergurten ausgestattet, um das Kleinkind im Kindersicherheitssitz sichern zu können.

Aus der DE 198 55 032 C1 ist ein Kindersitz für ein Fahrzeug, insbesondere für ein Kraftfahrzeug, bekannt, der mit einer Fangvorrichtung versehen ist, um ein den Kindersitz benutzendes Kind innerhalb des Kindersitzes zu halten und zu schützen. Ein Teil der Fangvorrichtung ist aus einer Gebrauchsstellung, in welcher er sich schützend vor dem Kind befindet, in eine Nichtgebrauchsstellung hochklappbar, in welcher das Kind aus dem Sitz gehoben werden kann. Die Fangvorrichtung ist zweiteilig ausgeführt, deren Teile an den Armlehnen angelenkt sind, die hinter der Rückenlehne mittels eines Brückenteils miteinander verbunden sind. An den vorstehenden Armlehnen sind Schwenkachsen in Längsrichtung der Längsachse des Sitzes vorgesehen, um die die Teile der Fangvorrichtung verschwenkbar sind.

Aus der DE 35 20 256 A1 ist ein Sicherheitskindersitz für Kraftfahrzeuge mit einem Sitzbereich und einem Schutzschild in Form eines Fangkörpers bekannt, der ebenfalls beabstandet zur Rückenlehne verlaufend angeordnet ist, und zwar verschwenkbar um eine quer zur Längsachse des Sitzes verlaufende Achse. Durch ein angebrachtes Hebegestänge kann der Fangkörper nach Lösen der Verbindung an der Rückenlehne vollständig abgeklappt werden.

Aus der DE 197 52 536 C1 ist ein Kindersitz für Fahrzeuge bekannt, bei dem an Armlehnen nach innen verschwenkbare Spieltischteile angelenkt sind. Die Schwenkachse verläuft dabei ebenfalls in Längsrichtung des Sitzes.

EP-A-1 077 152 offenbart auch einen gattungsgemäßen Kindersicher heitsitz mit Seitenwänden und vorklappbarer Rückenlehne, welches als nächstliegender Stand der Technik betrachtet wird.

Ausgehend von dem bekannten Stand der Technik liegt der Erfindung die Aufgabe zugrunde, einen Kindersitz so auszubilden, dass eine einfache Fixierung der Gurte des Fahrzeugsitzes am Kindersitz und eine schnellere Befestigung ermöglicht werden.

Gelöst wird die Aufgabe durch Ausgestaltung des Kindersicherheitssitzes entsprechend den in den Ansprüchen 1 und 2 angegebenen Merkmalen.

Nach Anspruch 1 ist mindestens eine Seitenwand an der Rückenlehne im unteren Bereich oder im Bereich des Überganges vom Sitzteil oder an diesem um eine horizontale Schwenkachse mindestens nach vorn verschwenkbar angelenkt und aus einer hochgestellten Gebrauchsposition in eine vorgeklappte Position verbringbar und in der hochgestellten Gebrauchsposition mittels einer Arretierungseinrichtung an der Rückenlehne arretierbar.

Die Seitenwand ist durch die schwenkbewegliche Anbringung nach vorn auf einfache Weise vorschwenkbar. Dies eröffnet die Möglichkeit, beispielsweise den Polsterbezug einer Rückenlehne eines Kindersicherheitssitzes einfacher entfernen und aufspannen zu können, als dies bei starr verbundenen Seitenwänden bzw. Seitenwangen möglich ist. Dies hat ferner den Vorteil, dass der für die Befestigung verwendete Fahrzeugsicherheitsgurt, der Diagonal- und/oder Beckengurt oder ein Quergurt, einfacher einlegbar ist.

Während Anspruch 1 die Anlenkung der Seitenwände im unteren Bereich des Sitzes vorsieht, ist nach Anspruch 2 alternativ vorgesehen, dass die Seitenwände im oberen Bereich der Rückenlehne an dieser befestigt sind. Die Seitenwänden werden also zum Einlegen des Schultergurtes und/oder des Beckengurtes nach oben geklappt. Der Abschnitt des Gurtes, der eingelegt wird, wird dann beim Herunterklappen einer Seitenwand oder beider Seitenwände um die hinteren Stirnflächen derselben ebenfalls umgelenkt, und zwar gegenüber der Fläche oder Seitenkante der Rückenlehne, und gesichert gehalten. Selbstverständlich können auch die weiteren Ausgestaltungsformen, die in den Unteransprüchen im Einzelnen angegeben sind, zur Erzielung einer besseren Klemmung sowohl für die Ausführungsform nach Anspruch 1 als auch für die Ausführungsform nach Anspruch 2 verwendet werden.

Es ist ferner möglich, die beiden Seitenteile bei der Ausführung nach Anspruch 2 über einen Flächenkörper, der ein Brückenteil ist und praktisch die Rückenlehne bildet, miteinander zu verbinden. Dieser schwenkbare Rückenlehnenteil kann an dem verbleibenden Rückenlehnenteil des Sitzes oder an einem Rahmenteil des Sitzes obenseitig angelenkt sein. Zum Einlegen des Gurtes wird die Rückenlehne mit den Seitenwänden nach oben verschwenkt. Durch eine Hilfsstütze kann diese Schwenkposition auch abgestützt werden, um dann den Gurt einlegen zu können. Wird die Rückenlehne nach unten geschwenkt, so erfolgt eine Klemmung entsprechend den Profilausbildungen der Rückenlehne und/oder den Seitenwänden gegenüber dem festen Rückenlehnenteil des Sitzes bzw. der Rahmenkonstruktion, die sich vom Sitzteil nach oben hin erstreckt und ein oberes Schwenklager für die Rückenlehne aufweist.

In weiterer Ausgestaltung dieser Ausführung, dies gilt gleichermaßen aber auch für die Ausführung nach Anspruch 1, kann darüber hinaus an den seitlichen Kopfteilen ein Aufprallschutzsicherungsbügel angelenkt sein, der in eine vordere Stellung verbracht werden kann, um beispielsweise das Kind beim Aufprall am Stirnbereich schützen zu können. Auch ist es möglich, an den Seitenwänden im unteren Bereich einen solchen Aufprallschutzkörper übergreifend vorzusehen. Dieser muss allerdings dann so ausgebildet sein, dass das Kind bei heruntergeklappter Rückenlehne ungehindert in den Sitz hineingesetzt werden kann. Die Ausführungsform nach Anspruch 2 stellt also gewissermaßen die Umkehr zur Ausführung nach Anspruch 1 dar, erleichtert aber ebenfalls das Einführen der fahrzeugeigenen Gurtabschnitte zur Sicherung des Sitzes am Fahrzeugsitz. Die Rückenlehne, die quasi geteilt ist, kann zugleich auch so ausgebildet sein, dass daran die Hosenträgergurte für das Kind befestigt werden können.

Auch diese Ausführungsform lässt sich insgesamt aus Kunststoff in einfacher Weise herstellen. Die Arretierungsmittel, die an der Unterseite im Sitzteil oder an den seitlichen Überstandsseitenwänden erforderlich sind, können ebenfalls so gestaltet sein, dass durch Aufbringen einer überhöhten Abzugskraft diese Verbindung gelöst wird, in dem unter die Unterkante der Rückwand gegriffen wird. Die Ausführungsform nach Anspruch 2 hat darüber hinaus den Vorteil, dass das Sitzteil in Verlängerung des hinteren Rückenlehnenträgerteils seitliche Begrenzungswände aufweisen kann, die zusammen mit den Seitenwänden die Umlenkung des eingeklemmten Gurtes mit bestimmen. Der Gurt kann also beispielsweise über die Rückenlehne selbst gestrafft werden und wird dann um die vorgezogene Kante der Seitenbegrenzungswände des Untergestells beim Eindrücken der Seitenwände bzw. des hochklappbaren Rückenlehnenteils mit den Seitenwänden umgelenkt.

Es ist aber auch möglich, in die vorhandene Rückenlehnenebene des Untergestells parallel zur Längsachse des Sitzes Sicken oder Ausnehmungen vorzusehen, in die der Gurt durch entsprechende erhabene Rippen an der Rückseite des hochklappbaren Rückenlehnenteils hineingedrückt wird, wodurch eine definierte Spannung und eine Selbstfixierung des Gurtabschnittes gegeben sind.

Die Seitenwand kann einen unteren Abschnitt als Seitenaufprallschutzabschnitt aufweisen und einen oberen Kopfabschnitt, der auch dem Seitenaufprallschutz dient. Die Seitenwand kann aber auch nur einen Aufprallschutzabschnitt für den Kopf des in dem Sitz sitzenden Kindes aufweisen. Dieser ist dann über einen Trägerabschnitt, der leistenförmig ausgebildet ist, verbunden, der, wie bei der geschlossenen Ausführungsform nach hinten verschwenkbar ist und über die seitlichen Stirnseiten der Rückenlehne mindestens im Einklemmbereich des Gurtes greift.

Es ist ersichtlich, dass bei diesen konstruktiven Lösungen ein Gurt des Fahrzeuges, z. B. der Diagonalgurt eines Dreipunkt-Sicherheitsgurtes, auf einfache Weise an der Vorderseite der Rückenlehne oder des hinteren Teils der Rückenlehne entlang geführt werden kann, wenn die Seitenwände vor- bzw. hochgeklappt sind. Werden die Seitenwände wieder aufgestellt bzw. heruntergeklappt, so wird beidseitig - bei einseitiger Ausführung einseitig - der Gurt automatisch von der Seitenwand und der korrespondierenden Stirnfläche der Rückenlehne eingeklemmt und um die hintere Stirnseite bzw. Seiten der Seitenwände umgelenkt, so dass ein fester Sitz ohne zusätzliche Klemmmittel erzielt wird. Der Beckengurt kann bei entsprechender Ausbildung ebenfalls mit eingeklemmt werden. Er ist aber auch, wie bei bekannten Sitzen üblich, zur Festlegung des Sititeiles des Sitzes möglich, den Beckengurt quer über die Armlehnenteile zu legen, z. B. in Aufnahmen in den die Armlehnen bildenden Seitenwänden des Sitzteiles, oder der Gurt kann auch über die Oberschenkel des Kindes gespannt sein.

Grundsätzlich kann die Anlenkung der Seitenwände an der Rückenlehne an jeder beliebigen Stelle im unteren Bereich des Kindersicherheitssitzes vorgenommen werden. Als besonders vorteilhaft hat es sich jedoch erwiesen, die Befestigung der Schwenkachse an seitlichen Lagerhaltern im unteren Bereich der Rückenlehne oder oben vorzusehen. Im Falle, dass die Rückenlehne abnehmbar am Sitzteil befestigt ist, ist es dann nämlich auf einfache Weise möglich, eine Trennung herbeizuführen, um den Sitzteil als Sitzerhöhung für größere Kinder im Kraftfahrzeug verwenden zu können. Die Rückenlehne wird von dem Sitzteil dabei abgezogen.

Vorteilhafte Ausgestaltungen des Kindersicherheitssitzes nach der Erfindung sind in den Unteransprüchen detailliert angegeben.

Um die Klemmwirkung auch auf den Schulter- bzw. Diagonalgurt des Fahrzeugsicherheitsgurtes zu erzielen, kann der Sitz auch so ausgebildet sein, dass eine Wand fester Bestandteil der Rückenlehne ist und die andere Seitenwand nur verschwenkbar angebracht ist. In diesem Fall muss eine Durchgriffsöffnung in der fest verbundenen Seitenwand vorgesehen sein, um mindestens den Diagonalgurt hindurchführen zu können. Mittels der hochgeschwenkten zweiten Seitenwand werden die gewünschte Klemmwirkung und die Umlenkung zur Erhöhung der Reibkraftkomponente vorgenommen. Der Gurt wird praktisch um zwei Ecken jeweils gelegt. Um den Sitz auch mit dem Kind mitwachsen lassen zu können, ist es weiterhin vorteilhaft, die horizontale Schwenkachse gegenüber dem Sitzteil höhenverstellbar auszubilden, so dass praktisch die Seitenwände nach oben verschoben werden können. Es versteht sich dann von selbst, dass die Arretierungsmittel an den Seitenwänden und der Rückenlehne so vorzusehen sind, dass eine gewünschte Verbindung herstellbar ist. Es ist auch möglich, die Rückenlehne selbst zusammen mit den mittels Lagerhalter schwenkbar gelagerten Seitenwänden gegenüber dem Sitzteil höhenverstellbar anzubringen.

Auch ist es möglich, den Diagonalgurt durch einen quer in die Rückenwand eingebrachten Hohlraum hindurchzuführen, wobei die Klemmwirkung durch Hochstellen der Seitenwände erhalten bleibt, wenn die verbleibende rückseitige Tiefe der Stirnseiten der Rückenlehne mit den Seitenwandabschnitten im hochgestellten Zustand zusammenwirkt. Es ist ferner möglich, den Sicherheitsgurt, z. B. den Diagonalgurt des Fahrzeuges, an der Rückenlehne im Stirnseitenbereich zu fixieren, z. B. in einem von einer Zunge gebildeten U-förmigen Spalt. Diese zungenförmige federnde Lasche wird dann durch die aufschwenkende Seitenwand bei entsprechender Dimensionierung niedergedrückt und klemmt den Gurt in gewünschter Weise ein. Zur seitlichen Positionierung können an den rückseitigen Stirnflächen der Seitenwände vorstehende bzw. an den Innenseiten nach hinten vorstehende Lagerungsbolzen vorgesehen sein, die in entsprechende Lagerungsausnehmungen in der Rückenlehne greifen. Diese Bolzen können zugleich auch Bestandteil einer Arretierungseinrichtung sein, die aus einem Querbolzen besteht, der federbelastet ist und durch eine Führungsbohrung in der Seitenwand und durch eine Lagerungsbohrung in der Seitenstirnwand der Rückenlehne in eine Querbohrung im Bolzen greift. Dem Fachmann eröffnen sich hier mannigfaltige Lösungsansätze zur Arretierung der Seitenwand an der Rückenlehne.

Wenn die Rückenlehne an den Stirnseiten rückseitig seitlich vorstehende Randzonen aufweist, gegen die formschlüssig angepasste hintere Stirnseitenabschnitte der Seitenwände greifen, so ist ersichtlich, dass die Druckflächen und damit die Reibfläche für einen eingespannten Gurt wesentlich erhöht werden können. Darüber hinaus ist es möglich, die überstehenden Randzonen so auszubilden, dass bei einem Auffahrunfall eine Dämpfung der Beschleunigung, die auf den Kindersicherheitssitz wirkt, erfolgt, da die Randzone durch den vorschnellenden Sitz verformt wird, was zu einer kontrollierten Dämpfung der Beschleunigungskräfte beim plötzlichen Bremsen führt.

Arretierungseinrichtungen können in verschiedensten Ausführungsformen vorgesehen sein. Als besonders vorteilhaft hat sich erwiesen, die Teile aus Kunststoff herzustellen, wodurch eine Arretierung unter Ausnutzung der elastischen Wirkung des Kunststoffes bei entsprechender Ausformung der ineinanderrastenden Verbindungselemente möglich ist. Z. B. kann die Verbindung derart ausgelegt sein, dass durch Ausübung einer ruckartigen Kraft auf den die Rückenlehne obenseitig überschlagenden Verbindungsbügel diese aufgehoben wird. Es versteht sich dabei von selbst, dass die formschlüssige Verbindung so auszulegen ist, dass die auf die Seitenwände ausgeübten Beschleunigungskräfte beim ruckartigen Abbremsen des Fahrzeuges nicht zur Auflösung dieser Verbindung ausreichend sein dürfen. Es sind aber auch alle anderen bekannten Arretierungsmöglichkeiten anwendbar. Eine einfache Arretierung ist auch dann möglich, wenn die Schwenkachse in einem Langlochlager geführt ist und die Seitenwände durch Anheben über den Bügel nach oben um ein definiertes Maß angehoben werden können. Bei dieser Ausführung ist eine Arretierung der Seitenwände mittels Haken möglich, die dann über entsprechende Arretierungsansätze an der Rückenlehne greifen können.

Um eine dämpfende Wirkung beim Seitenaufprall durch die Seitenwände zu erreichen, sind diese zweckmäßigerweise in Blastechnik aus Kunststoff gefertigt und weisen einen Hohlraum auf, wodurch die Wand nachgiebig ist, falls beim Seitenaufprall Körperteile anschlagen. Der Sitz kann auch als Schalensitz ausgebildet sein. Dabei bilden Sitzteil und Rückenlehne eine Einheit und sind z. B. aus Kunststoff in Blastechnik oder geschäumtem Kunststoff hergestellt. Die Seitenwände sind hieran verschwenkbar befestigt.

Die Erfindung bietet darüber hinaus den Vorteil, dass dann, wenn die Seitenwände auch rückseitig über die Rückenlehne hinaus verschwenkbar sind und in jeder Schwenkposition arretiert werden können, was vorgesehen ist, eine Anpassung an den abgewinkelten Rückenlehnenabschnitt des Fahrzeugsitzes oberhalb des Lordosenbereiches möglich ist und die Rückenlehne, ohne dass diese selbst schwenkbeweglich am Sitzteil angebracht werden muss, über die rückseitigen Stirnflächen der Seitenwände gegenüber der Rückenlehne des Sitzes fixiert ist. Zwar wird durch diese Lösung die Tiefe der Seitenaufprallfläche verringert, dies kann aber durch entsprechende großzügigere Dimensionierung der Seitenwände oder des Kopfteiles der Seitenwände ausgeglichen werden.

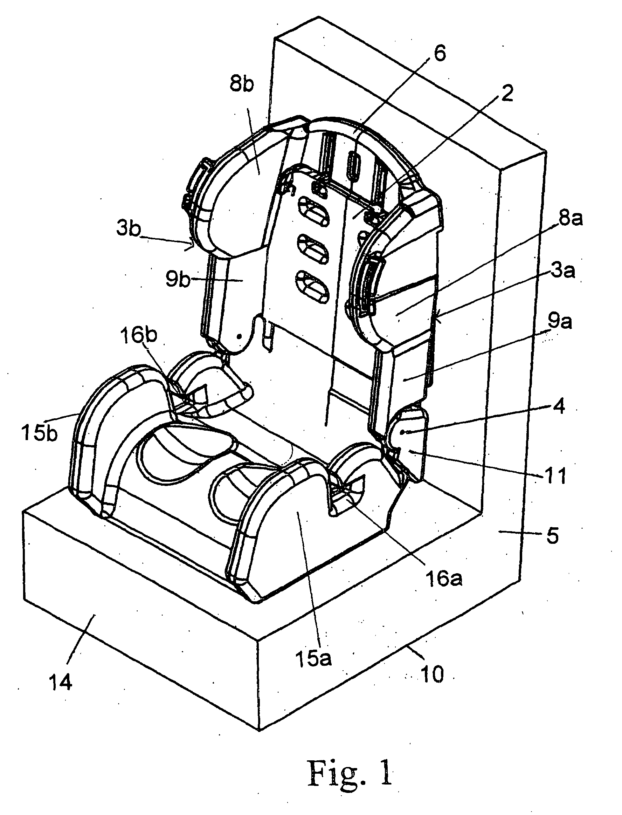

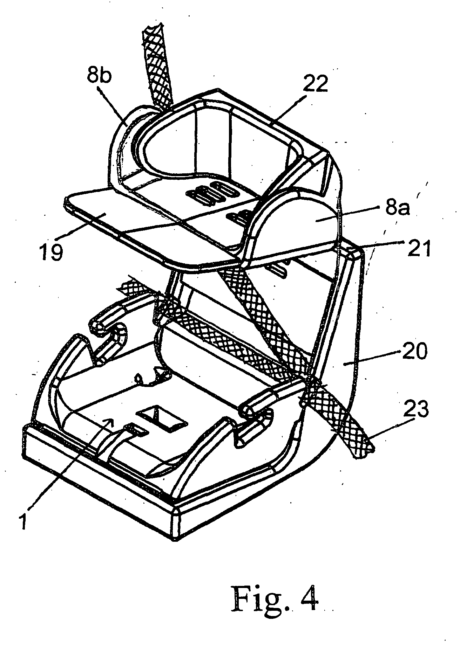

Die Erfindung wird nachfolgend anhand der in den Zeichnungen dargestellten Ausführungsbeispiele ergänzend erläutert. In den Figuren 1 bis 3 ist ein erstes Ausführungsbeispiel mit Seitenwänden dargestellt, deren Schwenklager unten angeordnet sind. In Figur 4 ist ein Ausführungsbeispiel mit obenseitig angelenkter Rückenlehne/Seitenwandkombination dargestellt.

In Figur 1 ist schematisch in perspektivischer Darstellung ein Kraftfahrzeugsitz 10 gezeichnet, der aus einem Sitzteil 14 und einem Rückenlehnenteil 5 besteht. Auf dem Fahrzeugsitzteil 14 ist ein erfindungsgemäß ausgebildeter Kindersicherheitssitz aufgestellt, der aus einem Sitzteil 1 mit bekannter Ausprägung besteht. An diesem Sitzteil 1 ist fest oder schwenkbeweglich oder an Rahmenholmen fixiert eine Rückenlehne 2 vorzugsweise abnehmbar befestigt, die mit der Rückseite an der Vorderseite der Rückenlehne 5 des Fahrzeugsitze 10 anliegt. Die in die Rückenlehne 2 eingezeichneten, quer verlaufenden Durchbrüche sind für die Positionierung der Schultergurte eines Hosenträgergurtsystems des Kindersicherheitssitzes vorgesehen, das nicht dargestellt und auch bezogen auf die Erfindung nicht relevant ist. Seitlich an der Rückenlehne 2 sind zwei Seitenwände 3a und 3b vorgesehen, die aufgestellt und mittels eines Bügels 6 obenseitig miteinander verbunden sind. Die Rückenlehne 2 kann ebenfalls in der Höhe an einem hinteren Tragegestell verstellbar angeordnet sein. Auch dies ist aus Figur 1 ersichtlich. Die Seitenwände 3a und 3b weisen Seitenaufprallschutzabschnitte 9a und 9b und Kopfabschnitte 8a und 8b auf, die weiter vorgeformt sind und dem Seitenaufprallschutz des Kopfes eines Kindes dienen sollen. Der Bügel 6 bildet eine starre Verbindung zwischen den Seitenwänden, während die Seitenwände 3a, 3b selbst an Lagerhaltern 11, die an der Rückenlehne oder an einem die Rückenlehne tragenden Rahmen, schwenkbar befestigt sind, und zwar über die Horizontalachse 4, wobei entweder an den Lagerhaltern 11 oder an den Seitenwänden 3a, 3b Bolzen vorgesehen sind, die in korrespondierende Lageröffnungen im anderen Teil eingesetzt sind. Zu diesem Zweck sind beidseitig der Rückenlehne 2 die Lagerhalter 11 vorgesehen, so dass der mittige Raum völlig frei ist. In den Seitenwänden 15a und 15b des Sitzteiles 1 ist jeweils eine Lageröffnung 16a und 16b in bekannter Ausführungsform vorgesehen, um den Sitz über einen Beckengurt eines Dreipunkt-Sicherheitsgurtes des Fahrzeuges zusätzlich sichern zu können. Dieser Beckengurt kann zugleich auch für die Sicherung des Kindes in dem Kindersicherheitssitz mitverwendet werden.

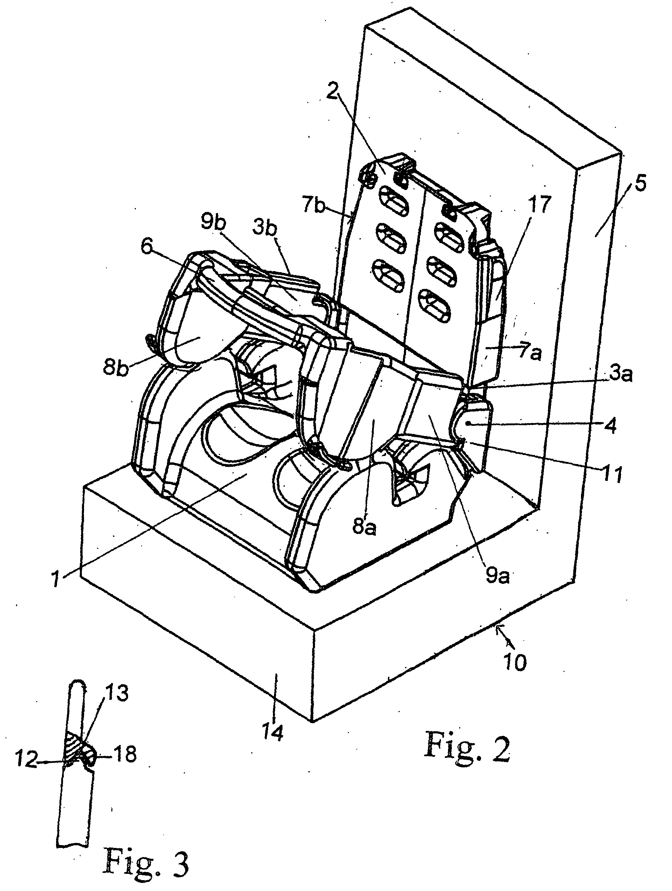

Aus Figur 2 ist ersichtlich, dass die Seitenwände 3a, 3b um die Horizontalachse 4 verschwenkbar vorklappbar sind. Es ist daraus auch ersichtlich, dass auf einfache Weise nun der Diagonalgurt z. B. eines Dreipunkt-Sicherheitsgurtes des Fahrzeuges über die Vorderseite der Rückenlehne.legbar und z. B. in einem Führungsspalt hinter eine Führungszunge 17 an der Stirnwand 8 einlegbar ist. Es ist aber auch möglich, ohne eine solche Führungszunge 17 den Diagonalgurt einfach schräg an der Vorderseite der Rückenlehne 2 entlang zu legen. Werden nun die Seitenwände hochgeklappt, also in die aus Figur 1 ersichtliche Stellung verbracht, so wird der Diagonalgurt, der nicht dargestellt ist, automatisch durch die Seitenwände 3a, 3b mit ihren inneren Seitenabschnitten, die über die Stirnseiten 7a und 7b der Rückenlehne 2 geschwenkt werden, gespannt und um die hinteren Stirnflächen der Seitenwände 3a und 3b umgelenkt. Es erfolgt praktisch eine z-förmige oder stufenförmige Verlegung um die Kanten der Rückenlehne 2 herum. Beim Hochschwenken wirkt zugleich auch eine Arretierungsvorrichtung, so dass der Gurt gesichert gehalten ist.

Als Arretierungsvorrichtung kann beispielsweise die aus Figur 3 ersichtliche Ausführungsform angewendet werden. Diese nutzt die Elastizität des Kunststoffes aus, wenn die Seitenwände und der Bügel aus Kunststoff z. B. in Blastechnik hergestellt sind und auch die Rückenlehne, die auch aus anderem Material bestehen kann, zweckmäßigerweise aus dem gleichen Material gefertigt ist. Der Bügel mit vorgezogenen Rastnasen 18 an den seitlichen Anbindungswandabschnitten greift auf die Rastansätze auf. Dazu sind an der Rückenlehne 2 Rastansätze 12 obenseitig wulstförmig ausgeformt vorgesehen, so dass auf diese die Rastnuten 13 im Befestigungsbereich des Bügels 6 aufrasten können. Die übergreifenden Flächen sind so geformt und dimensioniert, dass sie nur bei erhöhter Abzugskraft, die zudem eine nach oben gerichtet Komponente aufweisen muss, gelöst werden können. Die Konstruktion ist so zu wählen, dass bei einem Auffahrunfall ein automatisches Vorschwenken nicht erfolgt. Andere Arretierungseinrichtungen können hier aber auch zum Einsatz kommen.

In Figur 4 ist ein weiteres Ausführungsbeispiel eines erfindungsgemäß ausgebildeten Kindersicherheitssitzes dargestellt, der sich von denen in den Figuren 1 und 2 dargestellten Ausführungsbeispielen dadurch unterscheidet, dass die Umlenkungspunkte für die Seitenwände und die Rückenlehne nicht unterrückenseitig am Sitzteil vorgesehen sind, sondern obenseitig an einem hinteren Teil 21 der Rückenlehne.

An die Sitzteile schließt sich rückseitig nach oben erstreckend ein hinterer Teil 21 einer Rückenlehne an. Dieser Teil ist gewissermaßen Bestandteil eines Unterteils, in dem das Sitzteil befestigt ist. Seitlich weist der hintere Teil 21 vorstehende Begrenzungswände 20 auf, die um ein definiertes Maß die Vorderseite der aus einem Flächenkörper 19 und mindestens Seitenwänden 8a und 8b bestehenden Rückenlehne überstehen. Dieser Rückenteil ist im oberen Bereich am hinteren Teil 21 der Rückenlehne angelenkt und bildet die eigentliche Rückenlehne für das Kind, das in dem Sitz sitzt. Der Flächenkörper 19 mit den Kopfabschnitten 8a und 8b der Seitenwände ist aus der dargestellten Position nach unten verschwenkbar. Wird ein Fahrzeuggurt 23 vor dem Herunterschwenken eingelegt, so ist ersichtlich, dass er durch den Flächenkörper 19, der an dem hinteren Teil 21 der Rückenlehne anliegt, eingeklemmt wird. Diese Klemmung kann noch verstärkt bzw. kann eine Zugkraft auf den Gurt ausgeübt werden, indem die Begrenzungswände 20 so ausgeführt sind, das sie seitlich den Flächenkörper 19 in einem definierten Abstand überstehen, so dass der Gurt um die Vorderkanten der Begrenzungswände 20 gelegt ist, wenn die durch den Flächenkörper 19 und die Seitenwände mit den Kopfabschnitten 8a und 8b gebildete Rückenlehne nach unten verschwenkt wird. An der unteren Position sind nicht dargestellte Rastzungen vorgesehen, um die Rückenlehne in dieser Position fixieren zu können.

Es ist ferner aus der Darstellung ersichtlich, dass die beiden Kopfabschnitte 8a und 8b durch einen Kopf-Aufprallschutzbügel 22 miteinander verbunden sind, der praktisch vor die Stirn eines in dem Sitz sitzenden Kindes schwenkbar ist. Handelt es sich hierbei um einen anderen Prallkörper, der im unteren Bereich angeordnet ist, so kann dieser an nicht dargestellten Seitenwändenverlängerungen oder an den dargestellten Abschnitten, die nach unten verschoben werden können, in eine untere Position verbracht werden, um das Kind z. B. über den Bauchbereich schützen zu können.

Anstelle des dargestellten Ausführungsbeispiels mit dem verbindenden Flächenkörper 19 können die Seitenwände als gestreckte Wände selbstverständlich auch ausgeführt und einzeln oder zusammen verschwenkbar ausgeführt sein. In jedem Fall wird auch durch diese Ausführung beim Herunterklappen der Seitenwände ein sicheres Festklemmen des Gurtes 23 bewirkt.

Von Vorteil zum weiteren Schutz des Kindes ist es, wenn ein Querelement unmittelbar vor dem Bauch oder dem Brustkorb des Kindes angeordnet und dieses an den beiden Seitenwänden befestigt ist, wie dies in den Ansprüchen 26 bis 29 angegeben ist. Es kann sich dabei um starre und lösbare Befestigungen handeln. Nach dem Verschwenken der Seitenwände kann das Kind in den Sitz gesetzt werden. Nach dem Zurückschwenken ist das Kind nicht nur durch den Gurt sondern auch durch den Prallkörper geschützt. Die Verwendung eines Prallkörpers ermöglicht ferner die unmittelbare Fixierung des Sitzes durch den Fahrzeuggurt, indem dieser an der Rückenlehne anliegt, während das Kind durch den Prallkörper gesichert ist, der zudem ergonomisch ausgeformt oder als Teil eines Spieltisches ausgebildet sein kann.

### Bezugszeichenliste

- 1: Sitzteil
- 2: Rückenlehne
- 3a: Seitenwand
- 3b: Seitenwand
- 4: Schwenkachse
- 5: Rückenlehne des Fahrzeugsitzes
- 6: Bügel
- 7a: seitliche Stirnseite
- 7b: seitliche Stirnseite
- 8a: Kopfabschnitt
- 8b: Kopfabschnitt
- 9a: Seitenaufprallschutz
- 9b: Seitenaufprallschutz
- 10: Kraftfahrzeugsitz
- 11: Lagerhalter
- 12: Rastansatz
- 13: Rastnut
- 14: Sitzteil Fahrzeugsitz
- 15a: Seitenwand
- 15b: Seitenwand
- 16a: Lageröffnung
- 16b: Lageröffnung
- 17: Führungszunge
- 18: Rastnase
- 19: Flächenkörper
- 20: Begrenzungswände
- 21: hinterer Teil der Rückenlehne
- 22: Kopf-Aufprallschutzbügel
- 23: Gurt

## Patentansprüche

1. Kindersicherheitssitz zum Aufstellen auf und Befestigen an einem Kraftfahrzeugsitz, bestehend aus einem Sitzteil (1) und einem Rückenlehnenteil aus einer Rückenlehne (2) und diese mindestens vorderseitig überstehenden Seitenwänden (3a, 3b), **dadurch gekennzeichnet,**
**dass** mindestens eine Seitenwand (3a, 3b) an der Rückenlehne (2) im unteren Bereich oder im Bereich des Überganges zum Sitzteil (1) oder an diesem um eine horizontale, quer zur Längsachse des Kindersicherheitssitzes verlaufende Schwenkachse (4) mindestens nach vorne aus einer hochgestellten Gebrauchsposition in eine vorgeklappte Position verschwenkbar angelenkt und an der Rückenlehne (2) in der hochgestellten Gebrauchsposition mittels einer Arretierungseinrichtung arretiert ist, dass die Seitenwände (3a, 3b) mindestens einen vorstehend vorgesehenen Kopfabschnitt (8a, 8b) in Höhe des Kopfes des in dem Kindersicherheitssitz sitzenden Kindes und einen sich darunter befindenden Seitenaufprallschutzabschnitt (9a, 9b) oder einen leistenförmigen Trägerabschnitt aufweisen, und dass mindestens ein Abschnitt eines Kraftfahrzeuggurtes in der hochgestellten Gebrauchsposition der Seitenwand (3a, 3b) um die hintere Stirnfläche derselben herum verläuft.

2. Kindersicherheitssitz zum Aufstellen auf und Befestigen an einem Kraftfahrzeugsitz bestehend aus einem Sitzteil (1) und einem Rückenlehnenteil aus einer Rückenlehne (2) und diese mindestens vorderseitig überstehenden.Seitenwänden (3a, 3b), **dadurch gekennzeichnet, dass** mindestens eine Seitenwand (3a, 3b) an der Rückenlehne (2) im oberen Bereich um eine horizontale, quer zur Längsachse des Kindersicherheitssitzes verlaufende Schwenkachse (4) mindestens nach vorne aus einer ersten Gebrauchsposition in eine zweite angehobene Gebrauchsposition verschwenkbar angelenkt und an der Rückenlehne (2) in der ersten Gebrauchsposition mittels einer Arretierungseinrichtung arretiert ist, dass die Seitenwände (3a, 3b) mindestens einen vorstehend vorgesehenen Kopfabschnitt (8a, 8b) in Höhe des Kopfes des in dem Kindersicherheitssitz sitzenden Kindes und einen sich darunter befindenden Seitenaufprallschutzabschnitt (9a, 9b) oder einen leistenförmigen Trägerabschnitt aufweisen, und dass mindestens ein Abschnitt eines Kraftfahrzeuggurtes in der heruntergeklappten ersten Gebrauchsposition der Seitenwand um die hintere Stirnfläche derselben herum verläuft.

3. Kindersicherheitssitz nach Anspruch 1 oder 2, **dadurch gekennzeichnet, dass** er am Kraftfahrzeugsitz (10) mittels eines vorhandenen Sicherheitsgurtes, vorzugsweise mit Diagonalgurt eines Dreipunkt-Sicherheitsgurtes befestigt ist, wobei mindestens der Diagonalgurt zur Fixierung des Kindersicherheitssitzes zwischen einer seitlichen Stirnseite (7a, 7b), der Rückenlehne (2) und der korrespondierenden Innenseite der Seitenwand (3a, 3b) in der hochgestellten oder heruntergeklappten und arretierten Gebrauchsposition derselben umgelenkt ist und an der Vorderseite und/oder an der Seitenkante der Rückenlehne (2) anliegt.

4. Kindersicherheitssitz nach Anspruch 3, **dadurch gekennzeichnet, dass** in der zweiten Seitenwand (3a, 3b) eine Durchführungsöffnung mindestens für den Diagonalgurt des Fahrzeugsicherheitsgurtes vorgesehen ist, welche Durchführungsöffnung so ausgebildet ist, dass der Diagonalgurt an der Vorderseite der Rückenlehne (2) anliegt.

5. Kindersicherheitssitz nach Anspruch 1 oder 2, **dadurch gekennzeichnet, dass** beide Seitenwände (3a, 3b) auf einer gemeinsamen Schwenkachse (4) verschwenkbar angelenkt und unabhängig oder mittels eines oben- oder untenseitig vorgesehenen verbindenden Bügels (6) oder durch einen Flächenkörper (19), der den vorderen Teil einer geteilten Rückenlehne bildet, miteinander gekoppelt gemeinsam verschwenkbar sind.

6. Kindersicherheitssitz nach einem der Ansprüche 1, 2, 3 oder 5, **dadurch gekennzeichnet, dass** mindestens der Diagonalgurt des Kraftfahrzeugsicherheitsgurtes beidseitig an der Rückenlehne (2) durch das Zusammenwirken derselben mit den Seitenwänden (3a, 3b) in deren ersten Gebrauchspositionen mit der Rückenlehne (2) festgeklemmt und durch die rückseitigen Stirnflächen der Seitenwände (3a, 3b) umgelenkt ist oder zwischen dem Flächenkörper (19) und dem zweiten Rückenlehnenteil eingeklemmt und/oder im Zusammenwirken des Flächenkörpers (19) mit seitlich vor- und überstehenden Begrenzungswände (20) des hinteren Teils (21) der Rückenlehne umgelenkt ist.

7. Kindersicherheitssitz nach einem der vorhergehenden Ansprüche, **dadurch gekennzeichnet, dass** die horizontale Schwenkachse (4) gegenüber dem Sitzteil (1) höhenverstellbar angeordnet ist.

8. Kindersicherheitssitz nach Anspruch 1, 2 oder 7, **dadurch gekennzeichnet, dass** die Schwenklager der horizontalen Achse (4) in seitlich an der Rückenlehne (2) oder im oberen Bereich angebrachten Lagerhaltern (11) oder an dem hinteren Teil (21) der Rückenlehne (2) obenseitig vorgesehen sind.

9. Kindersicherheitssitz nach Anspruch 7 und 8, **dadurch gekennzeichnet, dass** die Lagerhalter (11) höhenverstellbar an der Rückenlehne (2) oder die Rückenlehne (2) gemeinsam mit festen Lagerhaltern (11) höhenverstellbar am Sitzteil (1) befestigt sind.

10. Kindersicherheitssitz nach einem der Ansprüche 1, 2, 3 oder 6 bis 9, **dadurch gekennzeichnet, dass** die Rückenlehne (2) einen von einer Stirnseite (7a) zur anderen (7b) querverlaufenden Hohlraum zum Durchführen mindestens des Diagonalgurtes des Kraftfahrzeugsicherheitsgurtes aufweist und dass die seitlichen Enden des Gurtes durch übergreifende Teile der Seitenwände (3a, 3b) im Zusammenwirken mit den hinteren Tiefenabschnitten der Stirnseiten (7a, 7b) und der Rückenlehne (2) umgelenkt sind.

11. Kindersicherheitssitz nach Anspruch 10, **dadurch gekennzeichnet, dass** der Hohlraum aus einem aus zwei miteinander verbindbaren Rückenlehnenteilen gebildeten Zwischenraum besteht, wobei der vordere Teil (19) gegenüber dem hinteren Teil (21) entweder abnehmbar, vorschwenkbar oder hochschwenkbar ausgeführt ist und beide Teile im zusammengesetzten Zustand fest miteinander verbunden sind.

12. Kindersicherheitssitz nach Anspruch 11, **dadurch gekennzeichnet, dass** der Hohlraum als Einklemmbereich für den querverlaufenden Gurt oder die querverlaufenden Gurte ausgelegt ist.

13. Kindersicherheitssitz nach einem der vorhergehenden Ansprüche, **dadurch gekennzeichnet, dass** die Kontaktierungsseitenflächen der Seitenwände (3a, 3b) unter Reibwirkung an den Gurtabschnitten anliegen und die Gurtabschnitte gegen den korrespondierenden Stirnwandabschnitt der Stirnseiten (7a, 7b) der Rückenlehne (2) oder gegen die Innenseiten der Begrenzungswände (20) gedrückt werden und eingeklemmt werden.

14. Kindersicherheitssitz nach einem der vorhergehenden Ansprüche, **dadurch gekennzeichnet, dass** zur Positionierung des Gurtes an mindestens einer Stirnwand (7a, 7b) oder in dem Hohlraum der Rückenlehne (2) oder an den Begrenzungswänden (20) Führungslager oder Klemmlager für den eingesetzten Gurtabschnitt vorgesehen sind.

15. Kindersicherheitssitz nach Anspruch 4 in Verbindung mit Anspruch 14, **dadurch gekennzeichnet, dass** an der Seitenwand (3a, 3b), in der die Durchführungsöffnung vorgesehen ist, ein Druck- oder Verriegelungsteil zur Reibfixierung des Gurtabschnittes an der Seitenwand (3a, 3b) vorgesehen ist, in der sich die Durchführungsöffnung befindet.

16. Kindersicherheitssitz nach einem der vorhergehenden Ansprüche, **dadurch gekennzeichnet, dass** die Rückenlehne (2) an den seitlichen Stirnseiten (7a, 7b) rückseitig seitlich vorstehende Randzonen aufweist, gegen die formschlüssig angepasste hintere Stirnseitenabschnitte der Seitenwände (3a, 3b) im aufgestellten oder heruntergeklappten Gebrauchszustand der Seitenwände (3a, 3b) drücken, und dass dazwischen der Gurt partiell eingeklemmt ist.

17. Kindersicherheitssitz nach einem der vorhergehenden Ansprüche, **dadurch gekennzeichnet, dass** die Seitenwände (3a, 3b) in der aufgestellten bzw. heruntergeklappten Gebrauchsposition mittels einer Arretierungseinrichtung in Form einer lösbaren Hak-, Rast- oder Riegelbefestigung an der Rückenlehne (2) fixiert sind, wobei eines der Verbindungselemente an der Rückenlehne (2) und das korrespondierende Verbindungselement an der Seitenwand (3a, 3b) und/oder am Bügel (6) oder im Befestigungsbereich des Bügels (6) an den Seitenwänden (3a, 3b) oder im unteren Bereich am Sitzteil oder Übergangsteil vorgesehen sind.

18. Kindersicherheitssitz nach Anspruch 17, **dadurch gekennzeichnet, dass** die Arretierungseinrichtung aus einer Formschlussrastverbindung besteht, wobei der übergreifende Rastansatz (12) als Wulstansatz ausgebildet ist und formschlüssig in eine Hohlkehle (13) eingreift, und der Rastansatz (12) an der Rückenlehne (2) und die Hohlkehle (13) an dem oberen Abschnitt der Seitenwand (3a, 3b) oder diese in kinematischer Umkehr angeordnet sind.

19. Kindersicherheitssitz nach Anspruch 17 oder 18, **dadurch gekennzeichnet, dass** die Seitenwände (3a, 3b) und die Rückenlehne aus Kunststoff bestehen und dass die Arretierung unter Ausnutzung der elastischen Wirkung des Kunststoffes bei entsprechender Ausformung der Verbindungselemente hergestellt ist.

20. Kindersicherheitssitz nach Anspruch 18 oder 19, **dadurch gekennzeichnet, dass** die Befestigungseinrichtung so dimensioniert ist, dass sie durch Ausübung eines bestimmten Drehmomentes auf die Seitenwände lösbar ist.

21. Kindersicherheitssitz nach Anspruch 20, **dadurch gekennzeichnet, dass** das Drehmoment durch Betätigung des Bügels (6) aufbringbar ist und dass beide Seitenwände (3a, 3b) arretiert sind.

22. Kindersicherheitssitz nach Anspruch 2 in Verbindung mit Anspruch 5, 19 oder 20, **dadurch gekennzeichnet, dass** ein Bügel als Prallkörper oberhalb des Beckens des im Sitz sitzenden Kindes vorgesehen ist.

23. Kindersicherheitssitz nach einem der Ansprüche 17 bis 19, **dadurch gekennzeichnet, dass** die Schwenkachse (4) in Langlochlagern in den Seitenwänden (3a, 3b) geführt ist, die sich in Höhenrichtung der Seitenwände (3a, 3b) erstrecken, und dass eine schwenkbewegliche Seitenwand (3a) oder beide Seitenwände (3a, 3b) gemeinsam über den Verbindungsbügel (6) oder den Flächenkörper (19) gegen die Kraft einer Federanordnung verschiebbar und mit hakenförmigen Verbindungselementen an den Seitenwänden über korrespondierende Rastansätze an der Rückenlehne (2) hebbar sind.

24. Kindersicherheitssitz nach Anspruch 19, **dadurch gekennzeichnet, dass** mindestens die Seitenwände und der Verbindungsbügel aus Kunststoff im Blasverfahren hergestellt sind.

25. Kindersicherheitssitz nach einem der vorhergehenden Ansprüche, **dadurch gekennzeichnet, dass** die Seitenwände (3a, 3b) über die Rückseite der Rückenlehne (2) hinaus verschwenkbar und in verschiedenen Schwenkpositionen mittels Arretierungseinrichtungen an der Rückenlehne (2) arretierbar sind.

26. Kindersicherheitssitz nach einem der vorhergehenden Ansprüche, **dadurch gekennzeichnet, dass** der Kindersicherheitssitz als Schalensitz einteilig ausgebildet ist und die Seitenwände angelenkt sind

27. Kindersicherheitssitz nach Anspruch 1 oder 2, **dadurch gekennzeichnet, dass** die Kopfabschnitte (8a, 8b) an den Seitenwänden höhenverstellbar angebracht sind.

28. Kindersicherheitssitz nach Anspruch 1, 2 oder 27, **dadurch gekennzeichnet, dass** die Kopfabschnitte (8a, 8b) vorderseitig miteinander über einen verschwenkbaren Kopf-Aufprallschutzbügel (22) verbunden sind.

## Claims

1. Child safety seat for placing on and fastening to a motor vehicle seat, consisting of a seat part (1) and a backrest part which consists of a backrest (2) and side walls (3a, 3b) projecting beyond this at least at the front side, **characterised in that** at least one side wall (3a, 3b) is articulated to the backrest (2) in the lower region or in the region of the transition to the seat part (1) or at this to be pivotable about a horizontal pivot axle (4), which extends transversely to the longitudinal axis of the child safety seat, at least forwardly out of an upright use position into a folded-forward position and is locked to the backrest (2) in the upright use position by means of a locking device, that the side walls (3a, 3b) have at least one head section (8a, 8b), which is provided to project forwardly, at the level of the head of the child seated in the child safety seat and a side impact protection section (9a, 9b) disposed thereunder or a strip-shaped support section, and that at least one section of a motor vehicle belt in the upright use position of the side wall (3a, 3b) extends around the rear end face thereof.

2. Child safety seat for placing on and fastening to a motor vehicle seat, consisting of a seat part (1) and a backrest part which consists of a backrest (2) and side walls (3a, 3b) projecting beyond this at least at the front side, **characterised in that** at least one side wall (3a, 3b) is articulated to the backrest (2) in the upper region to be pivotable about a horizontal pivot axle (4), which extends transversely to the longitudinal axis of the child safety seat, at least forwardly out of an first use position into a second raised use position and is locked to the backrest (2) in the first use position by means of a locking device, that the side walls (3a, 3b) have at least one head section (8a, 8b), which is provided to project forwardly, at the level of the head of the child seated in the child safety seat and a side impact protection section (9a, 9b) disposed thereunder or a strip-shaped support section, and that at least one section of a motor vehicle belt in the folded-down first use position of the side wall (3a, 3b) extends around the rear end face thereof.

3. Child safety seat according to claim 1 or 2, **characterised in that** it is fastened to the motor vehicle seat (10) by means of an existing safety belt, preferably a diagonal belt of a three-point safety belt, wherein for fixing the child safety seat at least the diagonal belt is guided around between a lateral end face (7a, 7b) of the backrest (2) and the corresponding inner side of the side wall (3a, 3b) in the upright or folded-down and locked use position thereof and bears against the front side and/or the side edge of the backrest (2).

4. Child safety seat according to claim 3, **characterised in that** a passage opening at least for the diagonal belt of the motor vehicle safety belt is provided in the second side wall (3a, 3b) and is so formed that the diagonal belt bears against the front side of the backrest (2).

5. Child safety seat according to claim 1 or 2, **characterised in that** the two side walls (3a, 3b) are articulated to be pivotable on a common pivot axle (4) and are pivotable independently or are coupled together to be pivotable in common by means of a connecting yoke (6), which is provided at the top side or bottom side, or by a flat body (19) forming the forward part of a divided backrest.

6. Child safety seat according to one of claims 1, 2, 3 and 5, **characterised in that** at least the diagonal belt of the motor vehicle safety belt is fixedly clamped to the backrest (2) at both sides at the backrest (2) by co-operation thereof with the side walls (3a, 3b) in the first use positions thereof and is deflected by the rearward end surfaces of the side walls (3a, 3b) or clamped in place between the flat body (19) and the second backrest part and/or is deflected in the co-operation of the flat body (19) with lateral forwardly and upwardly projecting boundary walls (20) of the rearward part (21) of the backrest.

7. Child safety seat according to one of the preceding claims, **characterised in that** the horizontal pivot axle (4) is arranged to be adjustable in height relative to the seat part (1).

8. Child safety seat according to claim 1, 2 or 7, **characterised in that** the pivot bearings of the horizontal axle (4) are provided in lateral bearing mounts (11), which are mounted at the backrest (2) or in the upper region, or are provided at the rearward part (21) of the backrest (2) at the top.

9. Child safety seat according to claim 7 and 8, **characterised in that** the bearing mounts (11) are fastened to the backrest (2) to be adjustable in height or the backrest (2) together with fixed bearing mounts (11) is fastened to the seat part (1) to be adjustable in height.

10. Child safety seat according to one of claims 1, 2, 3 and 6 to 9, **characterised in that** the backrest (2) has a cavity, which extends transversely from one end face (7a) to the other (7b), for passage of at least the diagonal belt of the motor vehicle safety belt and that the lateral ends of the belt are deflected by parts, which engage over, of the side walls (3a, 3b) in co-operation with the rearward depth sections of the end faces (7a, 7b) and the backrest (2).

11. Child safety seat according to claim 10, **characterised in that** the cavity consists of an intermediate space formed from two interconnectible backrest parts, wherein the front part (19) is constructed to be removable, pivotable forwardly or pivotable upwardly relative to the rear part (21) and the two parts are fixedly connected together in the assembled state.

12. Child safety seat according to claim 11, **characterised in that** the cavity is designed as a region for clamping in place the transversely extending belt or the transversely extending belts.

13. Child safety seat according to one of the preceding claims, **characterised in that** the contacting side surfaces of the side walls (3a, 3b) bear under friction effect against the belt sections and the belt sections are pressed against the corresponding end wall section of the end faces (7a, 7b) of the backrest (2) or against the inner sides of the boundary walls (20) and clamped in place.

14. Child safety seat according to one of the preceding claims, **characterised in that** for positioning the belt at at least one end wall (7a, 7b) or in the cavity of the backrest (2) or at the boundary walls (20) guide bearings or clamping bearings are provided for the inserted belt section.

15. Child safety seat according to claim 4 in conjunction with claim 14, **characterised in that** a pressure or locking member for frictional fixing of the belt section to the side wall (3a, 3b), in which the guide opening is disposed, is provided at the side wall (3a, 3b) in which the guide opening is provided.

16. Child safety seat according to one of the preceding claims, **characterised in that** the backrest (2) has, at the lateral end faces (7a, 7b) and at the rear side, laterally projecting edge zones against which rearward end face sections, which are adapted to be shape-locking, of the side walls (3a, 3b) press in the erected or folded-down use state of the side walls (3a, 3b) and that the belt is partially clamped in place therebetween.

17. Child safety seat according to one of the preceding claims, **characterised in that** the side walls (3a, 3b) are fixed in the erected or folded-down use position to the backrest (2) by means of a locking device in the form of a releasable hook, detent or latch fastening, wherein one of the connecting elements is provided at the backrest (2) and the corresponding connecting element is provided at the side wall (3a, 3b) and/or at the yoke (6) or in the fastening region of the yoke (6) at the side walls (3a, 3b) or in the lower region at the seat part or transition part.

18. Child safety seat according to claim 17, **characterised in that** the locking device consists of a shape-locking detent connection, wherein the detent projection (12), which engages over, is constructed as a bead projection and engages in shape-locking manner in a throat (13) and the detent projection (12) is arranged at the backrest (2) and the throat (13) at the upper section of the side wall (3a, 3b) or these are arranged in kinematic inversion.

19. Child safety seat according to claim 17 or 18, **characterised in that** the side walls (3a, 3b) and the backrest consist of plastics material and that the locking is produced with utilisation of the resilient effect of the plastic material in the case of corresponding shaping of the connecting element.

20. Child safety seat according to claim 18 or 19, **characterised in that** the fastening device is so dimensioned that it is releasable at the side walls by exertion of a defined torque.

21. Child safety seat according to claim 20, **characterised in that** the torque can be applied by actuation of the yoke (6) and that both side walls (3a, 3b) are locked.

22. Child safety seat according to claim 2 in conjunction with claim 5, 19 or 20, **characterised in that** a yoke as impact body is provided above the pelvis of the child sitting in the seat.

23. Child safety seat according to one of claims 17 to 19, **characterised in that** the pivot axle (4) is guided in slot mounts in the side walls (3a, 3b) which extend in the direction of height of the side walls (3a, 3b), and that a pivotably movable side wall (3a) or both side walls (3a, 3b) in common is or are displaceable by way of the connecting yoke (6) or the flat body (19) against the force of a spring arrangement and are raisable by hook-shaped connecting elements at the side walls by way of corresponding detent projections at the backrest (2).

24. Child safety seat according to claim 19, **characterised in that** at least the side walls and the connecting yoke are made of plastics material by blow moulding.

25. Child safety seat according to one of the preceding claims, **characterised in that** the side walls (3a, 3b) are pivotable out beyond the rear side of the backrest (2) and are lockable to the backrest (2) in different pivot positions by means of locking devices.

26. Child safety seat according to one of the preceding claims, **characterised in that** the child safety seat is constructed integrally as a shell seat and the side walls are pivotably attached.

27. Child safety seat according to claim 1 or 2, **characterised in that** the head sections (8a, 8b) are mounted at the side walls to be adjustable in height.

28. Child safety seat according to claim 1, 2 or 27, **characterised in that** the head sections (8a, 8b) are connected together at the front side by way of a pivotable head impact protection yoke (22).

## Revendications

1. Siège de sécurité pour enfant à installer et à fixer sur un siège de véhicule, se composant d'une partie de siège (1) et d'une partie de dossier composée d'un dossier (2) et de parois latérales faisant saillie au-dessus au moins à l'avant (3a, 3b), **caractérisé en ce qu'**au moins une paroi latérale (3a, 3b) est articulée de façon à pouvoir être pivotée sur le dossier (2) dans le secteur inférieur ou dans le secteur de transition relié à la partie de siège (1) ou sur celle-ci autour d'un axe de pivotement (4) horizontal tournant de façon transversale par rapport à l'axe longitudinal du siège de sécurité pour enfant au moins vers l'avant à partir d'une position d'utilisation relevée jusqu'à une position rabaissée et est bloquée sur le dossier (2) en position d'utilisation relevée au moyen d'un dispositif de blocage, **en ce que** les parois latérales (3a, 3b) comprennent au moins une section conçue pour la tête (8a,8b) prévue de façon saillante à l'avant à hauteur de la tête de l'enfant assis dans le siège de sécurité pour enfant et une section de protection latérale intégrée (9a, 9b) se trouvant au-dessous ou une partie de support moulée, et **en ce qu'**au moins une partie d'une ceinture du véhicule passe en position d'utilisation relevée de la paroi latérale (3a, 3b) autour de la surface frontale arrière de celle-ci.

2. Siège de sécurité pour enfant à installer et à fixer sur un siège de véhicule, se composant d'une partie de siège (1) et d'une partie de dossier composée d'un dossier (2) et de parois latérales faisant saillie au-dessus au moins à l'avant (3a, 3b), **caractérisé en ce qu'**au moins une paroi latérale (3a, 3b) est articulée de façon à pouvoir être pivotée sur le dossier (2) dans le secteur supérieur autour d'un axe de pivotement (4) horizontal tournant de façon transversale par rapport à l'axe longitudinal du siège de sécurité pour enfant au moins vers l'avant à partir d'une première position d'utilisation jusqu'à une seconde position relevée et est bloquée sur le dossier (2) en première position d'utilisation au moyen d'un dispositif de blocage, **en ce que** les parois latérales (3a, 3b) comprennent au moins une section conçue pour la tête (8a,8b) prévue de façon saillante à l'avant à hauteur de la tête de l'enfant assis dans le siège de sécurité pour enfant et une section de protection latérale intégrée (9a, 9b) se trouvant au-dessous ou une partie de support moulée, et **en ce qu'**au moins une partie d'une ceinture du véhicule passe en première position d'utilisation rabaissée de la paroi latérale (3a, 3b) autour de la surface frontale arrière de celle-ci.

3. Siège de sécurité pour enfant selon la revendication 1 ou 2, **caractérisé en ce qu'**il est fixé sur le siège du véhicule (10) au moyen d'une ceinture de sécurité présente, de préférence avec la sangle diagonale d'une ceinture de sécurité à trois points, sachant qu'au moins la sangle diagonale servant à fixer le siège de sécurité pour enfant est guidée de façon transversale entre une face frontale latérale (7a, 7b), le dossier (2) et le côté interne correspondant de la paroi latérale (3a, 3b) dans la position d'utilisation relevée ou rabaissée et bloquée et qu'elle est ajustée sur l'avant et/ou sur le bord latéral du dossier (2).

4. Siège de sécurité pour enfant selon la revendication 3, **caractérisé en ce qu'**une ouverture de passage est prévue dans la seconde paroi latérale (3a, 3b) au moins pour la sangle diagonale de la ceinture de sécurité du véhicule, laquelle ouverture de passage est conçue de façon à ce que la sangle diagonale soit ajustée à la face avant du dossier (2).

5. Siège de sécurité pour enfant selon la revendication 1 ou 2, **caractérisé en ce que** les deux parois latérales (3a, 3b) peuvent être pivotées ensemble sur un axe de pivotement (9) commun, articulées sur pivot et indépendante, ou couplées ensemble au moyen d'un arceau (6) de liaison prévue en haut ou en bas ou par une surface (19) qui constitue la partie avant d'un dossier à battants.

6. Siège de sécurité pour enfant selon l'une quelconque des revendications 1, 2, 3 ou 5, **caractérisé en ce qu'**au moins la sangle diagonale de la ceinture de sécurité de véhicule est fixée des deux côtés sur le dossier (2) grâce à la coopération entre celui-ci et les parois latérales (3a, 3b) dans leurs premières positions d'utilisation avec le dossier (2) et guidée de manière transversale à travers les faces frontales arrières des parois latérales (3a, 3b) ou fixée entre la surface (19) et la seconde partie de dossier et/ou guidée de manière transversale en coopération avec la surface (19) avec les parois de limitation (20) latérales saillantes devant et au-dessus de la partie arrière (21) du dossier.

7. Siège de sécurité pour enfant selon l'une quelconque des revendications précédentes, **caractérisé en ce que** l'axe de pivotement (4) horizontal est disposé de manière réglable en hauteur par rapport à la partie de siège (1).

8. Siège de sécurité pour enfant selon la revendication 1, 2 ou 7, **caractérisé en ce que** les paliers d'articulation de l'axe de pivotement (4) horizontal sont prévus en haut sur les supports de paliers (11) logés latéralement sur le dossier (2) ou dans le secteur supérieur ou sur la partie arrière (21) du dossier (2).

9. Siège de sécurité pour enfant selon la revendication 7 et 8, **caractérisé en ce que** les supports de paliers (11) sont fixés de manière réglable en hauteur sur le dossier (2) ou **en ce que** le dossier (2) conjointement avec les supports de paliers (11) sont fixés de manière réglable en hauteur sur la partie de siège (1).

10. Siège de sécurité pour enfant selon l'une quelconque des revendications 1, 2, 3 ou 6 à 9, **caractérisé en ce que** le dossier (2) comprend une cavité traversant d'un côté avant (7a) à l'autre (7b) pour faire passer à travers elle au moins la sangle diagonale de la ceinture de sécurité de véhicule et **en ce que** les extrémités latérales de la sangle sont guidées de manière transversale à travers les parties proéminentes des parois latérales (3a, 3b) en coopération avec les sections arrières profondes des faces frontales (7a, 7b) et du dossier (2).

11. Siège de sécurité pour enfant selon la revendication 10, **caractérisé en ce que** la cavité se compose d'un espace constitué à partir des deux parties du dossier que l'on peut raccorder ensemble, sachant que la partie de devant (19) est conçue de manière amovible, pivotante vers l'avant ou pivotante vers le haut par rapport à la partie arrière (21) et les deux parties sont reliées solidement l'une à l'autre de manière composite.

12. Siège de sécurité pour enfant selon la revendication 11, **caractérisé en ce que** la cavité est présentée comme secteur de serrage pour la sangle passant à travers elle ou les sangles passant au travers elle.

13. Siège de sécurité pour enfant selon l'une quelconque des revendications précédentes, **caractérisé en ce que** les surfaces latérales de contact des parois latérales (3a, 3b) sont ajustées sous l'effet du frottement aux parties de sangle et les parties de sangle sont pressées et serrées contre la partie de paroi frontale correspondante des côtés avant (7a, 7b) du dossier (2) ou contre les côtés internes des parois de limitation (20).

14. Siège de sécurité pour enfant selon l'une quelconque des revendications précédentes, **caractérisé en ce que** pour positionner la sangle sur au moins une paroi frontale (7a, 7b) ou dans la cavité du dossier (2) ou sur les parois de limitation (20) sont prévus un palier de guidage ou un palier de serrage pour la sangle introduite.

15. Siège de sécurité pour enfant selon la revendication 4 en relation avec la revendication 14, **caractérisé en ce que** sur la paroi latérale (3a, 3b), dans laquelle est prévue l'ouverture de passage, un élément de verrouillage ou de pression est prévu pour la fixation par frottement de la partie de sangle sur la paroi latérale (3a, 3b), dans laquelle se trouve l'ouverture de passage.

16. Siège de sécurité pour enfant selon l'une quelconque des revendications précédentes, **caractérisé en ce que** le dossier (2) comprend sur les faces frontales latérales (7a, 7b) des bordures faisant saillie latéralement et à l'arrière, contre lesquelles appuient des parties latérales arrières des parois latérales (3a, 3b) adaptées pour un emboîtement dans une position d'utilisation redressée ou rabaissée des parois latérales (3a, 3b) et **en ce que** la sangle est partiellement serrée entre les deux.

17. Siège de sécurité pour enfant selon l'une quelconque des revendications précédentes, **caractérisé en ce que** les parois latérales (3a, 3b) sont fixées en position d'utilisation redressée et/ou rabaissée au moyen d'un dispositif de blocage sous la forme d'une attache en forme de crochet, de cran ou de verrou détachable sur le dossier (2), sachant que sont prévus un des éléments de raccordement au dossier (2) et l'élément de raccordement correspondant sur la paroi latérale (3a, 3b) et/ou sur l'arceau (6) ou dans le secteur de fixation de l'arceau (6) sur les parois latérales (3a, 3b) ou dans le secteur inférieur sur la partie de siège ou la partie de transition.

18. Siège de sécurité pour enfant selon la revendication 17, **caractérisé en ce que** le dispositif de blocage se compose d'un attache en forme de cran, sachant que le raccord à cran (12) proéminent est conçu comme un raccord à talon et est mis en prise de façon à s'emboîter dans une cannelure (13), et le raccord à cran (12) sur le dossier (2) et la cannelure (13) sur la partie supérieure de la paroi latérale (3a, 3b) ou ceux-ci sont disposés en renversement cinématique.

19. Siège de sécurité pour enfant selon la revendication 17 ou 18, **caractérisé en ce que** les parois latérales (3a, 3b) et le dossier se composent de matière plastique et **en ce que** l'arrêt est fabriqué en utilisant l'effet flexible de la matière plastique lors du façonnage correspondant des éléments de raccords.

20. Siège de sécurité pour enfant selon la revendication 18 ou 19, **caractérisé en ce que** le dispositif de fixation est dimensionné de telle sorte qu'il soit détachable via l'application d'un certain moment de torsion sur les parois latérales.

21. Siège de sécurité pour enfant selon la revendication 20, **caractérisé en ce que** le moment de rotation peut être introduit par la manipulation de l'arceau (6) et **en ce que** les deux parois latérales (3a, 3b) sont bloquées.

22. Siège de sécurité pour enfant selon la revendication 2 en relation avec une revendication 5, 19 ou 20, **caractérisé en ce qu'**une poignée est prévue comme corps anti-choc au-dessus du bassin de l'enfant assis dans le siège.

23. Siège de sécurité pour enfant selon l'une quelconque des revendications 17 à 19, **caractérisé en ce que** l'axe de pivotement (4) est introduit dans les emplacements du trou longitudinal dans les parois latérales (3a, 3b), qui s'étendent vers le haut des parois latérales (2a, 3b), et **en ce qu'**une paroi latérale orientable par rotation (3a) ou les deux parois latérales (3a, 3b) peuvent être déplacées ensemble via l'arceau de raccordement (6) ou la surface (19) contre la force d'une disposition à ressort et **en ce qu'**elles peuvent être soulevées avec des éléments de raccordement en forme de crochet sur les parois latérales via des raccords à cran correspondants sur le dossier (2).

24. Siège de sécurité pour enfant selon la revendication 19, **caractérisé en ce qu'**au moins les parois latérales et l'arceau de raccordement sont fabriqués à partir d'une matière plastique au cours d'un procédé de soufflage.

25. Siège de sécurité pour enfant selon l'une quelconque des revendications précédentes, **caractérisé en ce que** les parois latérales (3a, 3b) peuvent être pivotées via la partie arrière du dossier (2) et peuvent être bloquées en différentes positions au moyen de dispositifs d'arrêt sur le dossier (2).

26. Siège de sécurité pour enfant selon l'une quelconque des revendications précédentes, **caractérisé en ce que** le siège de sécurité pour enfant est conçu en une pièce comme un siège-baquet et **en ce que** les parois latérales sont articulées.

27. Siège de sécurité pour enfant selon la revendication 1 ou 2, **caractérisé en ce que** les sections conçues pour la tête (8a, 8b) sont réglables en hauteur sur les parois latérales.

28. Siège de sécurité pour enfant selon la revendication 1, 2 ou 27, **caractérisé en ce que** les sections conçues pour la tête (8a, 8b) sont reliées ensemble à l'avant par un arceau de protection d'impact conçu pour la tête (22) réglable.
